Europäisches Patentamt

European Patent Office

Office européen des brevets

(11) Veröffentlichungsnummer : **0 000 867**
**B1**

(12) **EUROPÄISCHE PATENTSCHRIFT**

(45) Veröffentlichungstag der Patentschrift :
**15.04.81**

(51) Int. Cl.³ : **C 09 J   3/00**, C 08 J   5/12

(21) Anmeldenummer : **78100311.6**

(22) Anmeldetag : **06.07.78**

(54) **Klebmittel für Methacrylesterkunststoffe.**

(30) Priorität : **18.08.77 DE 2737270**
      **18.08.77 DE 2737270**

(43) Veröffentlichungstag der Anmeldung :
**07.03.79 (Patentblatt 79/05)**

(45) Bekanntmachung des Hinweises auf die Patenterteilung : **15.04.81 Patentblatt 81/15**

(84) Benannte Vertragsstaaten :
**DE FR GB NL SE**

(56) Entgegenhaltungen :
**BE - A - 818 205**

(73) Patentinhaber : **Röhm GmbH**
**Kirschenallee**
**D-6100 Darmstadt (DE)**

(72) Erfinder : **Kleine Doepke, Wolfgang, Dr.**
**Martinstrasse 39**
**D-6100 Darmstadt (DE)**
Erfinder : **Martin, Reinhold**
**Nieder-Kinziger-Strasse 42**
**D-6121 Ober-Kinzig (DE)**

EP 0 000 867 B1

Klebmittel für Methacrylesterkunststoffe

Zum Verkleben von Methacrylesterkunststoffen untereinander oder mit anderen Kunststoffen werden flüchtige organische Lösungsmittel verwendet, die diese Kunststoffe zu lösen vermögen. Die Lösungsmittel quellen oder lösen die Grenzschichten der zu verklebenden Kunststoffteile und ergeben unter günstigen Bedingungen nach dem Verdunsten einen optisch nahezu homogenen Verbund.

Es gibt zahllose organische Lösungsmittel für Polymethacrylate, jedoch sind nur wenige davon als Klebmittel verwendbar. Das Lösungsmittel soll die zu verklebenden Kunststoffflächen schnell anlösen, rasch eine ausreichende Standfestigkeit erreichen lassen, um unbeabsichtigtes Verrücken der verklebten Teile auszuschließen, und zu einer optisch klaren, blasenfreien und zugfesten Verklebung aushärten. Die Mehrzahl der organischen Lösungsmittel erfüllt nur einen Teil dieser Forderungen.

Die meisten Lösungsmittel erzeugen im oberflächennahen Bereich rasch einen hohen Quellungsdruck. Er verursacht besonders bei spannungsreichen, beispielsweise gebogenen, Teilen sogenannte Spannungsrisse, die senkrecht von der Klebfläche ausgehen. Nur wenige Lösungsmittel, z.B. einige aliphatische Chlorkohlenwasserstoffe, erzeugen keine Spannungsrisse. Die meisten davon verdunsten jedoch an der Luft so schnell, daß sich infolge der Verdunstungskälte die Luftfeuchtigkeit in der Klebnaht niederschlägt und eine bleibende Trübung hervorruft. Oft entstehen Luftblasen infolge der Schrumpfung der angequollenen Kunststoffoberfläche beim allmählichen Verdunsten des Lösungsmittels.

In allen Fällen ist die Zugfestigkeit der Klebnaht geringer als die der verklebten Kunststoffe selbst, so daß bei Belastung die Klebnaht abreißt.

Unter Berücksichtigung dieser zahlreichen Gesichtspunkte hat sich Methylenchlorid (Dichlormethan) als das bisher bestgeeignete Klebmittel für Acrylesterkunststoffe erwiesen. Es löst den Kunststoff schnell an und ergibt innerhalb von 10 sec eine standfeste Verklebung, so daß oft sogar erwünschte Korrekturen der gegenseitigen Stellung der Kunststoffteile nicht mehr möglich sind. Nach zwei Tagen ist die Endfestigkeit der Verklebung erreicht, jedoch ist der Rand der Klebfläche leicht trüb, was sich nur vermeiden läßt, wenn in einer Atmosphäre von niedriger absoluter Luftfeuchtigkeit gearbeitet wird.

Der Erfindung liegt die Aufgabe zugrunde, Klebmittel für Methacrylesterkunststoffe bereitzustellen, die die Nachteile der bekannten Lösungsmittel nicht aufweisen und trübungs- und blasenfreie Verklebungen von erhöhter Zugfestigkeit ergeben.

Erfindungsgemäß werden Nitromethan und/oder Nitroäthan als Klebmittel oder als Klebmittelzusatz für Methacrylesterkunststoffe verwendet. Darunter werden Polymethylmethacrylat und Mischpolymerisate aus überwiegenden Anteilen, insbesondere mehr als 80 Gew.-%, Methylmethacrylat und geringeren Anteilen, insbesondere weniger als 20 Gew.-%, an damit mischpolymerisierbaren ungesättigten Comonomeren, wie anderen Methacrylsäureestern, Estern der Acrylsäure, Styrol, Acryl- oder Methacrylnitril, Vinylchlorid, Vinylidenchlorid oder Vinylestern, verstanden. Die zu verklebenden Kunststoffe sollen in geeigneten organischen Lösungsmitteln löslich oder zumindest stark quellbar sein, d.h. sie dürfen nicht oder nur wenig vernetzt sein. Das Molekulargewicht der Kunststoffe spielt für die Verklebbarkeit eine nur untergeordnete Rolle. Daher können unschmelzbare Substanzpolymerisate ebenso verklebt werden wie extrudierte oder spritzgegossene Kunststoffteile. Die Verklebbarkeit von Spritzgußteilen gehört zu den besonderen Vorzügen der Klebmittel der Erfindung.

Nitroäthan wirkt auf Methacrylesterkunststoffe etwas langsamer ein als Nitromethan. Dadurch wird die Zeitspanne verlängert, in der sich die gegenseitige Stellung der zu verklebenden Kunststoffteile nach dem Zusammenfügen korrigieren läßt. Infolge seines höheren Siedepunktes verdunstet Nitroäthan langsamer als Nitromethan, erzeugt daher weniger Verdunstungskälte und setzt die Gefahr, daß sich die Klebnaht bei hoher Luftfeuchtigkeit durch Kondenswasser trübt, noch weiter herab. Das gilt besonders in dem Fall, daß Nitroäthan im Gemisch mit anderen Lösungsmitteln, wie z.B. Methylenchlorid, als Klebmittel oder Klebmittelzusatz verwendet wird. Nitroäthan kann in jedem beliebigen Mischungsverhältnis mit Nitromethan für alle beschriebenen Anwendungsarten eingesetzt werden. Die erwähnten Unterschiede hinsichtlich der Einwirkungs- und der Verdunstungsgeschwindigkeit treten dann nach Maßgabe des Mischungsverhältnisses ein.

Obwohl Nitromethan oder Nitroäthan jeweils allein als Klebmittel verwendet werden können, wird es bevorzugt, Gemische des Nitromethans und/oder Nitroäthans mit anderen flüchtigen organischen Flüssigkeiten mit Siedepunkten nicht über 200°, vorzugsweise unter 150°, zu verwenden. Diese Flüssigkeiten können selbst Lösungsmittel für die zu verklebenden Kunststoffe sein und den Klassen der Ketone, Ester, Äther oder aliphatischen Chlorkohlenwasserstoffe angehören, z.B. Aceton, Cyclohexanon, Methylacetat, Butylacetat, Tetrahydrofuran, Chloroform, Tetrachlorkohlenstoff, Dichlormethan, Dichloräthan usw. Diese Lösungsmittel haben für sich allein als Klebmittel die oben geschilderten Nachteile. Im Gemisch mit wenigstens 30 Gew.-% Nitromethan oder -äthan (berechnet auf das Gewicht des Gemisches) werden diese Nachteile erheblich unterdrückt. So nimmt die Spannungsrißbildung deutlich ab und die Klebfestigkeit wird erhöht. In der nachfolgenden Tabelle ist die Klebzugfestigkeit von verklebten Teilen aus extrudiertem Acrylglas 14 Tage nach der Verklebung angegeben.

**0 000 867**

| Lösungsmittel | Klebzug-festig-keit N/mm² | Gemisch mit Nitromethan Gewichtsver-hältnis Lösungsm./ Nitromethan | Klebzug-festigkeit N/mm² |
|---|---|---|---|
| Aceton | 23,9 | 40 : 60 | 34,0 |
| Cyclohexanon | 16,5 | 20 : 80 | 35,2 |
| Toluol | 19,8 | 40 : 60 | 32,4 |
| Tetrahydrofuran | 22,8 | 60 : 40 | 33,3 |
| Dichlormethan (Methylenchlorid) | 35,9 | 60 : 40 | 42,4 |
| 1,2-Dichloräthan | 34,2 | 60 : 40 | 36.4 |

Nitromethan allein läßt unter den gleichen Bedingungen eine Klebzugfestigkeit von 36,6 N/mm² erreichen. Die aliphatischen Chlorkohlenwasserstoffe, die allein ähnlich hohe Festigkeiten ergeben, lassen im Gemisch mit Nitromethan oder -äthan höhere Festigkeitswerte erreichen als mit jeder der Komponenten allein. Gemische aus Nitromethan oder -äthan und Dichlormethan in einem Gewichtsverhältnis zwischen 30 : 70 bis 80 : 20 werden bevorzugt im Sinne der Erfindung verwendet.

Man kann Nitromethan oder Nitroäthan auch im Gemisch mit solchen organischen Flüssigkeiten anwenden, die keine Lösungsmittel für die zu verklebenden Kunststoffe sind und keine eigene Klebwirkung entwickeln. Sie können so gewählt werden, daß sie die Quellzeit oder die Zeit bis zum Erreichen der Standfestigkeit verlängern, was bei schwierigen Verklebungen zuweilen erwünscht ist. Diese Zusätze können weniger flüchtig als Nitromethan oder -äthan sein. Die geringere Verdunstungsgeschwindigkeit verhindert die Blasenbildung in der Klebnaht und die Trübung durch Kondensation von Luftfeuchtigkeit.

Beispiele für derartige Mischungen und die bei der Verklebung von extrudiertem Acrylglas erzielten Festigkeiten sind in der nachfolgenden Tabelle angegeben :

| Lösungsmittel | Zusatz | Gewichts-verhältnis (Lösungsm. : Zus.) | Kleb-festig-keit in N/mm² |
|---|---|---|---|
| Nitromethan | Äthanol | 80 : 20 | 31,5 |
| Nitromethan | Trichloräthan | 60 : 40 | 27,8 |
| Nitromethan | Dimethylformamid | 70 : 30 | 31,3 |
| Nitromethan + Dichlormethan (40 : 55 G. Teile) | Phenoxyäthanol | 95 : 5 | 43,0 |

Wenn Nitromethan oder Nitroäthan oder dessen Gemisch mit flüchtigen organischen Flüssigkeiten als Klebmittel eingesetzt werden, wird die Klebverbindung durch das Material der zu verklebenden Kunststoffe selbst hergestellt. Man kann auch sogenannte Kleblacke verwenden, die in dem Lösungsmittel ein gelöstes Polymerisat enthalten.

Nach dem Verdunsten des Lösungsmittels bildet das Polymerisat die Klebverbindung. Die erfindungsgemäß verwendeten Klebmittel können als derartige Polymerisatzusätze z.B. Polymethyl methacrylat, Polyvinylacetat, Polyvinyläther oder Celluloseacetobutyrat enthalten. Dem Polymerisatanteil ist durch die Viskosität der Lösung eine obere Grenze gesetzt. Die Lösungsviskosität bei 20° soll im allgemeinen nich über 10 000 mPa.s liegen. Mit Vorteil werden etwa 3 bis 30 Gew.-% eines solchen Polymeren verwendet, das eine Viskosität der Lösung im Bereich von 500 bis 2 000 mPa.s ergibt.

Die erfindungsgemäß zu verwendenden Klebmittel dienen in erster Linie dazu, Teile aus Methacrylesterkunststoffen untereinander zu verkleben. Um diese mit anderen Werkstoffen, wie Holz, Papier, Karton, Leder, Metall, keramischem Material, Glas, Porzellan oder andersartigen Kunststoffen, z.B. Phenolharz- oder Aminoplastharz-Formkörpern, Polycarbonat, PVC, Urethanschaumstoffen und dergl., zu verkleben,

**0 000 867**

werden, wenn Nitromethan oder Nitroäthan allein oder deren Gemische mit flüchtigen organischen Flüssigkeiten nicht die erwünschte Klebfestigkeit erreichen lassen, mit Vorteil Kleblacke verwendet.

Die Verklebung von Teilen aus Acrylglas, insbesondere extrudiertem Acrylglas, untereinander stellt ein bevorzugtes Anwendungsgebiet der Erfindung dar. Dabei werden unter Acrylglas gegossenes oder extrudiertes Polymethyl-methacrylat oder Mischpolymerisate des Methyl-methacrylats mit höchstens 10 Gew.-% an anderen ungesättigten Monomeren verstanden. Die Verwendung von Nitromethan oder - äthan im Gemisch mit Dichlormethan wird für diesen Zweck bevorzugt.

In der zweiten Tabelle ist bereits auf die Verwendung eines Lösungsgemisches, bestehend aus 40 Gew.-Teilen Nitromethan und 55 Gew.-Teilen Dichlormethan, dem 5 Gew.-Teile Phenoxyäthanol zugesetzt wurden, hingewiesen. Eine solche Nitromethan oder -äthan enthaltende Dreierkombination, die hinsichtlich ihrer mengenmäßigen Zusammensetzung variieren kann, verdient hervorgehoben zu werden, da bei ihrer Anwendung auch beim Arbeiten in einer Atmosphäre mit hoher relativer Luftfeuchtigkeit klare Klebnähte erhalten werden. Phenoxyäthanol kann unter Erzielung des gleichen Effekts durch andere Glykoläther, wie Methylglykol oder Alkyldiglykoläther, ersetzt werden. Zur Erhaltung einer hohen Klebfestigkeit sollen diese Zusätze in Mengen bis 10 Gew.-%, bezogen auf das gesamte Lösungsmittelgemisch, zur Anwendung kommen.

In den nachfolgenden Beispielen werden jeweils eine Verklebung unter Verwendung von Nitromethan und eine zweite Verklebung unter Verwendung von Nitroäthan unter sonst gleichen Bedingungen durch-geführt. Bei den Festigkeitsergebnissen wird jeweils zuerst der mit Nitromethan und danach der mit Nitroäthan erhaltene Wert angegeben.

## Beispiel 1

Die Längsseiten zweier Probekörper (10 mm × 270 mm × 60 mm) aus Polymethylmethacrylat werden ca. 60 sec. in Nitromethan bzw. Nitroäthan getaucht und zusammengefügt. Der Verbund ist innerhalb von 120 sec. standfest, d.h. er verrutscht nicht mehr. Durch Belastung eines Fügeteils mit einem Gewicht von 150 g/cm$^2$ werden die Klebflächen in innigen Kontakt gebracht. Die Belastung wurde 24 Std. aufrechterhalten. Nach 13 Tagen Lagerung ohne Belastung bei Raumtemperatur werden 10 Probekörper (8 mm × 20 mm × 120 mm) aus der Verklebung herausgearbeitet und die Zugfestigkeit in Anlehnung an DIN 53455 ermittelt. Ergebnis 36,6 N/mm$^2$ bzw. 34,8 N/mm$^2$.

## Beispiel 2

Durchführung der Verklebung wie in Beispiel 1. Als Lösungsmittelkleber wird eine Mischung aus Methylenchlorid und Nitromethan bzw. Nitroäthan (60/40) angewendet. Die Probe ist in 20 sec. standfest. Die Zugfestigkeit nach 14 Tagen Lagerung beträgt 43,7 N/mm$^2$ bzw. 36,4 N/mm$^2$.

## Beispiel 3

Durchführung wie in Beispiel 1 beschrieben. Zur Verklebung wird das Lösungsmittelgemisch Methylenchlorid/Nitromethan bzw. -äthan/Phenoxyäthanol (55/40/5) verwendet. Die Klebnaht ist völlig klar und blasenfrei. Nach 14 Tagen Lagerung bei Raumtemperatur wird eine Festigkeit von 43 N/mm$^2$ bzw. 33,7 N/mm$^2$ erreicht.

## Beispiel 4

Durchführung wie in Beispiel 1 beschrieben. Zur Anwendung kommt eine Lösung von 30 Teilen Polymethylmethacrylat in 70 Teile eines Lösungsmittelgemisches, bestehend aus Methylenchlorid/Nitromethan bzw. -äthan/Phenoxyäthanol (57/40/3).

Die Verklebung ist nach 3 Minuten standfest. Nach 14 Tagen Lagerung wird eine Festigkeit von 37 N/mm$^2$ bzw. 31,8 N/mm$^2$ erreicht.

### Ansprüche

1. Verwendung von Nitromethan und/oder Nitroäthan als Klebmittel oder als Zusatz zu flüchtigen Klebmittelgemischen zum Verkleben von Teilen aus Methacrylesterkunststoffen untereinander oder als Zusatz zu Kleblacken für Methacrylesterkunststoffe.

2. Verwendung eines Gemisches aus wenigstens 30 Gew.-% Nitromethan und/oder Nitroäthan und bis zu 70 Gew.-% anderen flüchtigen, organischen Flüssigkeiten mit einem Siedepunkt nicht über 200 °C als Klebmittel oder Klebmittelzusatz gemäß Anspruch 1.

4

3. Verwendung von Nitromethan und/oder Nitroäthan oder deren Gemische gemäß Anspruch 2 mit einem Gehalt an gelösten Polymerisaten und einer Lösungsviskosität von höchstens 10.000 mPa.s bei 20 °C, als Klebmittel oder Klebmittelzusatz gemäß Anspruch 1.

4. Verwendung eines Gemisches aus Nitromethan und/oder Nitroäthan und Dichlormethan in einem Gewichtsverhältnis zwischen 30 : 70 bis 80 : 20 als Klebmittel oder Klebmittel-zusatz gemäß Anspruch 1.

5. Verwendung von Nitromethan und/oder Nitroäthan oder deren Gemischen gemäß den Ansprüchen 1 bis 4 zum Verkleben von Acrylglas.

6. Verwendung von Nitromethan und/oder Nitroäthan gemäß den Ansprüchen 1 bis 5 unter Zusatz eines Glykoläthers in Mengen bis.

7. Verwendung von Nitromethan und/oder Nitroäthan oder deren Gemischen gemäß den Ansprüchen 5 und 6 zum Verkleben von extrudiertem Acrylglas.

## Claims

1. Use of nitromethane and/or nitroethane as adhesive or as additive to volatile adhesive mixtures for the glueing of parts consisting of methacrylate plastics to one another or as additive to adhesive varnishes for methacrylate plastics.

2. Use of a mixture of at least 30 % by weight of nitromethane and/or nitroethane and of up to 70 % by weight of other volatile organic liquids with a boiling point not above 200 °C as adhesive or adhesive additive according to claim 1.

3. Use of nitromethane and/or nitroethane or mixtures thereof according to claim 2 with a content of dissolved polymers and with a solution viscosity of at most 10 000 mPa.s at 20 °C as adhesive or adhesive additive according to claim 1.

4. Use of a mixture of nitromethane and/or nitroethane and dichloromethane in a weight ratio of between 30 : 70 and 80 : 20 as adhesive or adhesive additive according to claim 1.

5. Use of nitromethane and/or nitroethane or mixtures thereof according to claims 1 to 4 for the glueing of acrylic glass.

6. Use of nitromethane and/or nitroethane according to claims 1 to 5, with the addition of a glycol ether in quantities of up to 10 % relative to the total solvent mixture, for the glueing of acrylic glass.

7. Use of nitromethane and/or nitroethane or mixtures thereof according to claims 5 and 6 for the glueing of extruded acrylic glass.

## Revendications

1. Utilisation de nitrométhane et/ou de nitroéthane en tant que colle ou en tant qu'additif à des mélanges adhésifs volatils pour le collage de pièces de matières synthétiques à base d'ester méthacrylique entre elles, ou en tant qu'additif à des vernis collants pour matières synthétiques à base d'ester méthacrylique.

2. Utilisation d'un mélange d'au moins 30 % en poids de nitrométhane et/ou de nitroéthane et de 70 % en poids au maximum d'autres liquides organiques volatils dont le point d'ébullition ne dépasse pas 200 °C, en tant que colle ou qu'additif adhésif selon la revendication 1.

3. Utilisation de nitrométhane et/ou de nitroéthane ou de leurs mélanges selon la revendication 2, contenant des polymères dissous et ayant une viscosité de solution de 10 000 mPa.s au maximum à 20 °C, en tant que colle ou qu'additif adhésif selon la revendication 1.

4. Utilisation d'un mélange de nitrométhane et/ou de nitroéthane et de dichlorométhane, dans un rapport pondéral compris entre 30 : 70 et 80 : 20, en tant que colle ou qu'additif adhésif selon la revendication 1.

5. Utilisation de nitrométhane et/ou de nitroéthane ou de leurs mélanges selon l'une quelconque des revendications 1 à 4, pour le collage de verre acrylique.

6. Utilisation de nitrométhane et/ou de nitroéthane selon l'une quelconque des revendications 1 à 5, avec addition d'un éther de glycol dans des proportions de 10 % au maximum, sur la base du mélange total de solvants, pour le collage de verre acrylique.

7. Utilisation de nitrométhane et/ou de nitroéthane ou de leurs mélanges selon la revendication 5 ou 6, pour le collage de verre acrylique extrudé.